(19) Europäisches Patentamt
European Patent Office
Office européen des brevets

(11) **EP 4 266 170 A1**

(12) **EUROPÄISCHE PATENTANMELDUNG**

(43) Veröffentlichungstag:
25.10.2023  Patentblatt 2023/43

(51) Internationale Patentklassifikation (IPC):
**G06F 8/36** (2018.01)    **G06F 8/75** (2018.01)

(21) Anmeldenummer: 22169486.2

(52) Gemeinsame Patentklassifikation (CPC):
**G06F 8/36; G06F 8/75**

(22) Anmeldetag: **22.04.2022**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Puntel Schmidt, Philipp**
**90453 Nürnberg (DE)**
• **Witte, Martin**
**91126 Schwabach (DE)**

(74) Vertreter: **Siemens Patent Attorneys**
**Postfach 22 16 34**
**80506 München (DE)**

(54) **VERFAHREN ZUR ANALYSE EINES PROGRAMMCODES UND RECHNERSYSTEM ZUR ANALYSE EINES PROGRAMMCODES**

(57) Die Erfindung betrifft ein Verfahren zur Analyse eines Programmcodes (AW) einer Steuerungssoftware einer Automatisierungsanlage für eine industrielle Anlage,
wobei die Steuerungssoftware modular aufgebaut ist und einzelne Module wiederum Bausteine ($FB_i$, $DB_i$) umfassen, wobei
- der Programmcode (AW) analysiert wird und eine Querverweisliste (QL) von verwendeten Variablen ($V_i$) durch eine Aufstellung von einer ersten Information (I1) bezüglich eines Ortes des Aufrufs der Variablen ($V_i$) und einer zweiten Information (I2) bezüglich der Art der Verwendung der Variablen ($V_i$) erstellt wird, und es wird anhand der Schnittstellen zwischen zwei Modulen auf eine Ähnlichkeit zwischen zwei Modulen geschlossen, wobei mit der Kenntnis der Ähnlichkeit allgemeingültige Module abgeleitet werden.

FIG 3

EP 4 266 170 A1

**Beschreibung**

Die Erfindung betrifft ein Verfahren zur Analyse eines Programmcodes einer Steuerungssoftware einer Automatisierungsanlage für eine industrielle Anlage, wobei die Steuerungssoftware modular aufgebaut ist und einzelne Module wiederum Bausteine umfassen.

Insbesondere im Maschinenbau, auch z.B. im Anlagenbau werden immer häufiger vorgefertigte Module genutzt, welche auch preengineered Module genannt werden, um eine Maschine oder Anlage zu errichten bzw. in Betrieb zu setzen. Module im Automatisierungskontext werden auch Funktionsgruppen, Stationen oder ähnlich genannt. Es sind logische Zusammenfassungen von zu automatisierenden Geräten, die gemeinsam eine spezifische automatisierte Funktion ausführen sollen. Eine Anlage oder Maschine kann viele verschiedene, aber auch viele gleichartige automatisierte Funktionen ausführen. Es gibt in einer Anlage oder Maschine meist mehrere Module, die alle dieselbe oder ähnliche Aufgaben ausführen.

Das Handhaben von Steuerungscode bzw. Programmcode einer Steuerungssoftware einer Automatisierungsanlage stellt einen erheblichen Kostenfaktor in Bezug auf das Engineering von Projekten dar. Steuerungscode-Projekte sind häufig sehr komplexe und große Projekte, die teils aus hunderttausenden Verknüpfungen und Querverweisen bestehen. Der Entwurf von SPS-Software sollte daher zum Ziel haben, Aktivitäten wie Inbetriebnahme oder Wartung/Erweiterbarkeit zu unterstützen. Die Art und Weise, wie SPS-Code implementiert wird, steht diesen Zielen jedoch häufig entgegen.

Bei einer Dimensionierung und Auslegung von Modulen für eine Anlage wird häufig auf bereits bestehende Implementierung von Modulen zurückgegriffen. Das bedeutet, dass vorhandene Softwareprojekte analysiert werden müssen und aus vorhandenen Code-Artefakten sollen nach Möglichkeit allgemeingültige Module abgeleitet werden. Diese Module können dann für ein weiteres Vorgehen zur Verfügung stehend und z.B. in einer Bibliothek abgespeichert werden.

Die heutige Vorgehensweise sieht in der Regel so aus, dass sehr ähnliche Module immer wieder neu implementiert werden, auch bei nur marginale Abweichungen einzelner Funktionen von Modulen. Das bedeutet, dass für die gleichen Funktionen mitunter viele unterschiedliche Implementierungen vorhanden sind, ohne dass diese erkenntlich wären. Derzeit gibt es keine Unterstützung bei der Erkennung/Erstellung von Modulen.

Es ist demnach eine Aufgabe der vorliegenden Erfindung das Erstellen von allgemeingültigen Modulen aus einem Bestand eines Programmcodes einer Steuerungssoftware, insbesondere bei Wechsel einer SPS-Generation oder bei Wechsel auf ein neues Engineering-Werkzeug zu erleichtern.

Die Aufgabe wird beim Verfahren zur Analyse eines Programmcodes einer Steuerungssoftware eine Automatisierungsanlage für eine industrielle Anlage, wobei die Steuerungssoftware modular aufgebaut ist, und einzelne Module wiederum Bausteine umfassen, dadurch gelöst, dass in einen ersten Schritt der Programmcode analysiert wird und eine Querverweisliste von verwendeten Variablen durch eine Aufstellung von einer ersten Information bezüglich eines Ortes des Aufrufes der Variablen und einer zweiten Information bezüglich der Art der Verwendung der Variablen erstellt wird, weiterhin werden in einen zweiten Schritt mittels einer Cluster-Analyse Cluster dadurch identifiziert, dass eine Aufrufbeziehung in den Programmcode der Module durch einen Datenaustausch einer Variablen zwischen zwei Bausteinen erkannt wurde und diese Aufrufbeziehung wird dann dem jeweiligen Cluster zugeordnet, in einen dritten Schritt schließlich können die Cluster dahingehend analysiert werden, dass mit Hilfe der Querverweisliste aus jedem Eintrag der Querverweisliste, welcher zu einer Aufrufbeziehung des Clusters passt, ein Datenfeld erzeugt wird, in welchem ein Quell-Eintrag, ein Ziel-Eintrag und ein Zähler-Eintrag des Datenaustausches hinterlegt wird, in einen vierten Schritt wird dann jeweils ein Modul-Vergleichsfaktor für einen analysierten Cluster aus dem Quotienten aus der Summe aller Zähler-Einträge und Anzahl der Datenfelder gebildet, anschließend wird in einen fünften Schritt ein Vergleichs-Maß für eine semantische Äquivalenz des Programmcodes für zumindest zwei Cluster gebildet, hierfür werden die Anzahl der erzeugten Datenfelder für einen ersten Cluster und die Anzahl der erzeugten Datenfelder für einen zweiten Cluster ins Verhältnis gesetzt und anschließend mit dem jeweiligen Modul-Vergleichsfaktor in Beziehung gesetzt, wobei anhand des Vergleichs-Maß eine Ähnlichkeit zwischen verschiedenen Clustern abgeleitet wird und mittels des Vergleichs-Maß eine Entscheidung herbeigeführt wird, ob ein allgemeingültiges Modul aus den diesen Clustern betreffenden Modulen bzw. aus den diesen Clustern betreffenden Bausteinen ableitbar ist.

Die Erfindung bezeichnet als Cluster eine Gruppe mit Datenobjekten mit ähnlichen Eigenschaften. Die Menge bzw. die Gruppenzuordnung der in einem Datensatz gefundenen "ähnlichen Objekten" bezeichnet man als Clustering, Verfahren zur Berechnung einer solchen Gruppierungen auch als Clusteranalyse. Nicht zu einem Cluster gehörende Datenobjekte bezeichnet man als Ausreißer oder Rauschen.

Mit der hier vorgestellten Lösungen wird das Ziel, das Erstellen von allgemeingültigen Modulen aus einem SoftwareBestand heraus, bei Wechsel einer SPS-Generation, insbesondere durch die Cluster-Analyse und den anschließenden Ähnlichkeitsvergleich erreicht.

Bei der Lösung des Problems wird die Idee genutzt, dass eine Funktion bereits durch ihre Schnittstellen zu Datenblöcken gut charakterisiert ist, d.h. es ist nicht nötig, den Code im Einzelnen zu analysieren. Die hier vorgestellte Lösung analysiert entsprechend die Schnittstellen eins bestehenden Moduls und erzeugt aus diesen mit Hilfe einer Formel einen Zahlenwert. Dieser Zahlenwert wird für verschiedene Module berechnet und ermöglicht in einen folgenden Schritt das Vergleichen von verschiedenen Modulen. So kann die Summe aller Schnittstellen insgesamt, aber auch die jeweiligen Vergleichsfaktoren mit den einzelnen Schnittstellen herangezogen werden. Hierfür werden die Summen aller Schnittstellen, beispielsweise für ein erstes Modul und ein zweites Modul in ein Verhältnis gesetzt und anschließend mit dem berechneten Vergleichsfaktor für ein Modul in Beziehung gesetzt. Dasselbe erfolgt für alle Module, wobei für die Berechnung die Module bzw. ihre indizierten Modulnummern und die dazugehörigen Werte vertauscht werden. Beispielsweise kann mit der Formel

$$Vergleichsfaktor_{Modulübergreifend} = \left( \sum Alle\ Schnittstellen_{Modul\ 1} * Vergleichsfaktor_{Modul\ 2} \right) - \left( Vergleichsfaktor_{Modul\ 1} * \sum Alle\ Schnittstellen_{Modul\ 2} \right)$$

Der so gedanklich aufgespannte Vektorraum entspricht der intendierten Vergleichsmöglichkeit hinsichtlich einer Ähnlichkeit zwischen zwei verschiedenen Modulen, wobei gilt: Je kleiner der berechnete modulübergreifende Vergleichsfaktor, desto ähnlicher sind sich die zu vergleichenden Module (Wert 0 = die Module sind identisch). Je größer der berechnete Wert, umso weniger haben die zu vergleichenden Module gemeinsam. Das intendierte Vorgehen ermöglicht es zusätzlich weitere Dimensionen mit aufzunehmen, im hier gezeigten Beispiel ist nur ein zweidimensionaler Vektorraum aufgespannt. Das Prinzip lässt sich aber prinzipiell auf n-Dimensionen und damit auf n-Vergleichsmöglichkeiten erweitern.

Wird das vorgenannte Verfahren rechnerisch implementiert, so hat es sich als vorteilhaft herausgestellt, bei der Cluster-analyse eine Design-Struktur-Matrix zu nutzen, wobei die Design-Struktur-Matrix eine obere Dreiecksmatrix und eine untere Dreiecksmatrix umfasst, als Elemente der Design-Struktur-Matrix werden die Bausteine eingesetzt, in der oberen Dreiecksmatrix wird ein schreibender Datenaustausch zwischen den Bausteinen erfasst und in der unteren Dreiecksmatrix wird ein lesender Datenaustausch zwischen den Bausteinen erfasst.

Beispielsweise kann es sich hier um eine Komponenten-basierte Design-Struktur-Matrix handeln, hierbei werden Teile eines Systems zueinander in Beziehung gesetzt. Für die vorgeschlagene Lösung ist die abgebildete Beziehung der Datenaustausch zwischen einem Funktionsbaustein und Datenbausteinen. Ein ausgefülltes Feld in der Design-Struktur-Matrix gibt dann an, dass eine Aufrufbeziehung von einen Baustein auf der vertikalen Achse mit einen Baustein in einer horizontalen Achse erfolgt und umgekehrt. Die Design-Struktur-Matrix ist eine Methode für Erfassung, Modulierung, Analyse und Synthese der Vernetzung von Elementen in hochvernetzten Systemen.

Vorteilhafterweise werden aus den als allgemeingültigen Modulen erkannten Clustern wieder verwendbare Softwaremodule erzeugt. Insbesondere beim Anlagenbau können beispielsweise Applikationen wie Wickeln, Querschneiden, Fördern, Vereinzeln, Gruppieren als wiederverwendbare Applikationsmodule erstellt werden.

Weiterhin ist es für einen Inbetriebsetzer von Vorteil, wenn die Ergebnisse für das Vergleichs-Maß zwischen zwei Modulen in eine Abhängigkeitsmatrix visuell dargestellt werden, dieses ermöglicht einem Inbetriebsetzer den sofortigen Überblick über alle verglichenen Module zu erkennen.

Zur Ermittlung des Vergleichs-Maß hat sich folgende Formel:

$$M = (Anzahl\ der\ Datenfelder_{Modul1} * VF1_{Modul2}) - (VF1_{Modul1} * Anzahl\ der\ Datenfelder_{Modul2})$$

bewährt.

Das vorgestellte Verfahren erzielt besonders dann eine Kostenersparnis bei der Durchführung eines Systemwechsels von einer bestehenden Industrieanlage mit Alt-Geräten auf eine modernisierte Industrieanlage mit Neu-Geräten, wobei die allgemeingültigen Module aus einem Softwarebestand der Module der Alt-Geräte identifiziert und generiert werden. Die identifizierten und generierten Module können sodann eventuell nach einem Refactoring auf der modernisierten Anlage und den Neu-Geräten eingesetzt werden. Refactoring bezeichnet in der Software-Entwicklung die manuelle oder auch automatisierte Strukturverbesserung von Quellcode unter Beibehaltung des beobachtbaren Programmverhaltens. Demnach bezeichnet Refactorierung eine Restrukturierung einer Software unter Beibehaltung des Funktionsangebotes mit dem Ziel die Performance der Software und das Engineering zu erleichtern.

Weitere Vorteile, insbesondere bei der Migration von Alt-Geräten auf Neu-Geräten sind folgende:
Die komplexen Aufgabenstellungen mit Steuerungscodes zu lösen, sind jetzt schnell und einfach durch das so gewonnene modular aufgebaute Baukastensystem realisierbar.

Es werden vorgefertigte Funktionsbausteine bereitgestellt.

Die Kosten für einen Entwicklungsaufwand können gesenkt werden. Man erhält planbare transparente Kosten.

Die eingangs genannte Aufgabe wird ebenfalls durch ein Rechnersystem ausgestaltet zur Analyse eines Programmcodes einer Steuerungssoftware einer Automatisierungsanlage für eine industrielle Anlage, wobei die Steuerungssoftware modular aufgebaut ist und einzelne Module wiederum Bausteine umfassen, dadurch gelöst, dass das Rechnersystem eine Schnittstelle aufweist, ausgestaltet auf den Programmcode zuzugreifen, dabei umfasst das Rechnersystem ein erstes Analysemittel ausgestaltet den Programmcode zu analysieren und eine Querverweisliste von verwendeten Variablen durch eine Aufstellung einer ersten Information bezüglich eines Ortes des Aufrufs der Variablen und einer zweiten Information bezüglich der Art der Verwendung der Variablen zu erstellen, und weiterhin weist das Rechnersystem ein zweites Analysemittel auf, welches ausgestaltet ist eine Aufrufbeziehung durch einen Datenaustausch einer Variablen zwischen zwei Bausteinen zu erkennen und weiterhin ist es ausgestaltet diese Aufrufbeziehung mittels einer Clusteranalyse dann entsprechenden Clustern zuzuordnen, weiterhin aufweisend ein drittes Analysemittel ausgestaltet die erkannten Cluster dahingehend zu analysieren, dass mit Hilfe der Querverweisliste aus jedem Eintrag der Querverweisliste, welcher zu einer Aufrufbeziehung des Clusters passt ein Datenfeld erzeugt wird, in welchem ein Quell-Eintrag, ein Ziel-Eintrag und ein Zähler-Eintrag des Datenaustausches hinterlegt wird, weiterhin aufweisend ein erstes Bestimmungsmittel ausgestaltet ein Modul-Vergleichsfaktor für jeweils einen analysierten Cluster aus dem Quotient aus der Summe aller Zähler-Einträge und Anzahl der Datenfelder zu bestimmen, weiterhin aufweisend ein zweites Bestimmungsmittel ausgestaltet ein Vergleichs-Maß für eine semantische Äquivalenz des Programmcode für zumindest zwei Cluster zu bestimmen, dabei ist das zweite Bestimmungsmittel dazu ausgestaltet die Anzahl der erzeugten Datenfelder für einen ersten Cluster und die Anzahl der erzeugten Datenfelder für einen zweiten Cluster in ein Verhältnis zu setzen und anschließend mit den jeweiligen Modulvergleichsfaktor in Beziehung zu setzen, und weiterhin aufweisend ein drittes Bestimmungsmittel ausgestaltet anhand des Vergleichs-Maß eine Ähnlichkeit zwischen verschiedenen Clustern zu bestimmen und weiterhin ausgestaltet mittels des Vergleichs-Maß eine Entscheidung herbeizuführen, ob ein allgemeingültiges Modul aus den diese Cluster betreffenden Modulen bzw. aus den diese Cluster betreffenden Bausteinen ableitbar ist.

In einer weiter optimierten Ausgestaltung weist das Rechnersystem mit seinem dritten Analysemittel eine Design-Struktur-Matrix auf, welche eine obere Dreiecksmatrix und eine untere Dreiecksmatrix umfasst, als Elemente der Design-Struktur-Matrix sind die Bausteine eingesetzt, in der oberen Dreiecksmatrix ist der schreibende Datenaustausch zwischen den Bausteinen dargestellt und in der unteren Dreiecksmatrix ist der lesende Datenaustausch zwischen den Bausteinen dargestellt.

Insbesondere mit Hinblick auf eine Inbetriebsetzung kann ein Inbetriebsetzer das Rechnersystem mit großem Vorteil bedienen, wenn es ein Aufbereitungsmittel aufweist, welches ausgestaltet ist, die Ergebnisse für das Vergleichs-Maß zwischen zwei Modulen in einer Abhängigkeitsmatrix auf einen Display visuell darzustellen, wobei die Abhängigkeitsmatrix interaktive Anzeigemittel aufweist, welche ein Inbetriebsetzer den sofortigen Vergleich über alle verglichenen Module ermöglicht.

Die Erfindung wird anhand eines Ausführungsbeispiels mit der Zeichnung weiter erklärt. Dabei zeigt

FIG 1    einen Programmablaufplan des Verfahrens,

FIG 2    eine Design-Struktur-Matrix zur Cluster-Bildung,

FIG 3    einen Cluster in einer detaillierten Ansicht und

FIG 4    ein Rechnersystem zur Analyse eines Programmcodes.

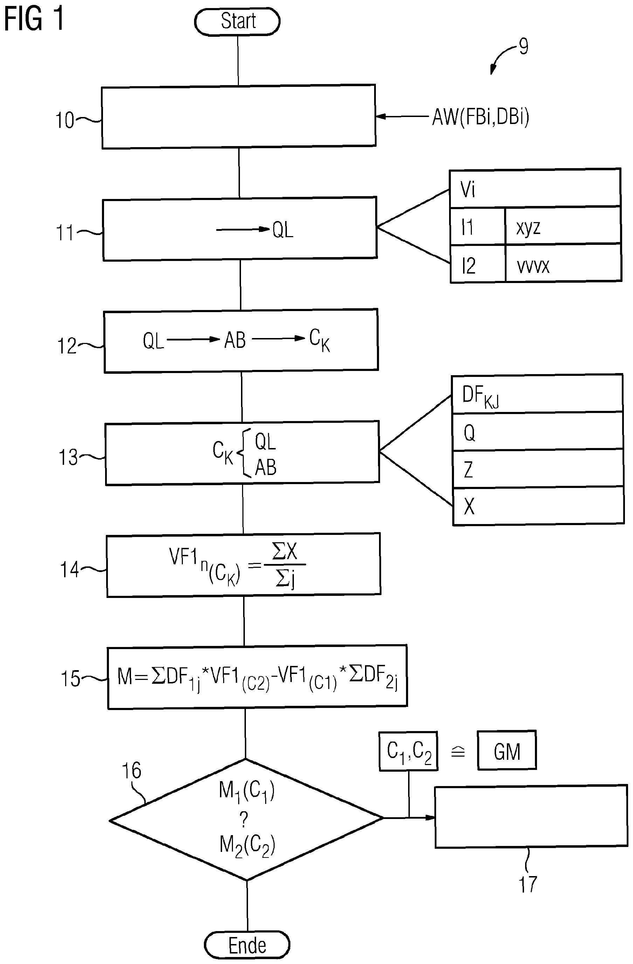

Die FIG 1 zeigt einen Programmablaufplan 9 für ein Verfahren zur Analyse eines Programmcodes AW einer Steuerungssoftware einer Automatisierungsanlage 1 für eine industrielle Anlage 2. Die Steuerungssoftware ist dabei modular aufgebaut und einzelne Module weisen wiederum Bausteine $FB_i, DB_i$ auf. Nach einen Programmstart "Start" wird über ein Einlesen 10 der Programmcode AW eingelesen. In einem ersten Schritt 11 wird der Programmcode AW analysiert und es wird eine Querverweisliste QL von verwendeten Variablen $V_i$ für eine Aufstellung von einer ersten Information I1 bezüglich eines Ortes des Aufrufs der Variablen $V_i$ und einer zweiten Information I1 bezüglich der Art der Verwendung der Variablen $V_i$ erstellt.

In einem zweiten Schritt 12 werden mittels einer Clusteranalyse Cluster $C_k$ dadurch identifiziert, dass eine Aufrufbeziehung AB in dem Programmcode AW der Module durch einen Datenaustausch einer Variablen $V_i$ zwischen den Bausteinen $FB_i, DB_i$ erkannt wurde und dieser Aufruf der Beziehung wird dann dem jeweiligen Cluster $C_k$ zugeordnet.

In einem dritten Schritt 13 werden die Cluster $C_k$ dahingehend analysiert, dass mit Hilfe der Querverweisliste QL aus jedem Eintrag der Querverweis-Liste QL, welcher zu einer Aufrufbeziehung AB des Clusters $C_k$ passt, ein

Datenfeld $DF_{kj}$ erzeugt wird. In diesem Datenfeld $DF_{kj}$ befindet sich ein Quell-Eintrag Q, ein Ziel-Eintrag Z und ein Zähler-Eintrag x des Datenaustausches.

In einem vierten Schritt 14 wird ein Modul-Vergleichsfaktor $VF1_n$ für einen analysierten Cluster $C_k$ aus dem Quotienten aus der Summe aller Zähler-Einträge Summe x und der Anzahl der Datenfelder $DF_{kj}$ gebildet.

In einem fünften Verfahrensschritt 15 wird ein Vergleichs-Maß M für eine semantische Äquivalenz des Programmcodes AW für zumindest zwei Cluster $C_k$ gebildet, hierfür werden die Anzahl der erzeugten Datenfelder $DF_{kj}$ für einen ersten Cluster $C_1$ und die Anzahl der erzeugten Datenfelder $DF_{kj}$ für einen zweiten Cluster $C_2$ in ein Verhältnis gesetzt und anschließend mit dem jeweiligen Modul-Vergleichsfaktor $VF1_n$ in Beziehung gesetzt, wobei anhand des Vergleichs-Maß M eine Ähnlichkeit zwischen verschiedenen Clustern abgeleitet wird und mittels des Vergleichs-Maß M eine Entscheidung herbeigeführt wird, ob ein allgemein gültiges Modul GM aus diesen Clustern $C_k$ betreffenden Module bzw. aus den diese Cluster $C_k$ betreffenden Bausteinen FBi,DBi ableitbar ist. Die Entscheidungsfindung findet dann in einem Entscheidungsschritt 16 statt, wobei in einen weiteren Schritt über ein Prognosemittel 17 die Prognose bezüglich allgemeingültig ableitbarer Module GM gegeben wird.

Mit anderen Worten wird gemäß des Verfahrens zur Analyse eines Programmcodes AW in dem ersten Schritt 11 eine Extrahierung der Querverweise aus dem Code durchgeführt. Es wird also aus dem Code eine Querverweis-Liste QL erzeugt. Querverweise enthalten alle Aufrufe aller in einem Programm verwendeten Variablen $V_i$ einer Steuerung mit Informationen, wo diese Variablen $V_i$ im Konkreten aufgerufen werden und wie diese im Konkreten verwendet werden. Damit sind die Querverweise bzw. die Querverweise-Liste QL eine Grundlage für eine Definition von Schnittstellen.

Mit dem zweiten Schritt 12 wird eine Identifizierung von Clustern $C_k$ durchgeführt. Cluster $C_k$ beschreiben zusammengehörige Teile einer Anlage/Maschine. Jedes Modul, das untersucht wird, soll einen Cluster $C_k$ entsprechen. Cluster $C_k$ können entweder durch Anwendung eines Clustering-Algorithmus aus dem Code extrahiert werden oder Cluster $C_k$ sind durch eine Bausteinsemantik eindeutig identifizierbar.

In dem dritten Schritt 13 wird eine Quantifizierung der Schnittstellen innerhalb eines Clusters $C_k$ durchgeführt. Die Schnittstellen innerhalb eines Clusters $C_k$ werden aus der Querverweis-Liste QL extrahiert. Diese bilden für jeden Cluster $C_k$ ein Abhängigkeitsmodell des in einen Cluster $C_k$ und nach außen stattfindenden Informationsaustausches. Ein eingesetzter Algorithmus erzeugt aus jedem Eintrag in der Querverweis-Liste QL, der zu einem spezifischen Cluster $C_k$ passt, ein neues Datenfeld $DF_{kj}$. In diesem Datenfeld $DF_{kj}$ ist ein Quell-Eintrag Q, ein Ziel-Eintrag Z und ein Zähler-Eintrag x bzw. eine Gewichtung des Datentransfers hinterlegt. Die Gewichtung eines Datentransfers und somit einer Schnittstelle ist im Default-Zustand immer 1. Werden doppelte Einträge gefunden, d.h. der Datentransfer zwischen der Quelle und dem Ziel wird mehrfach verwendet, wird die Gewichtung, also der Zähler-Eintrag x, um den Wert 1 hochgezählt. Es werden in diesem Fall keine redundanten Datenfelder $DF_{kj}$ angelegt.

Mit dem vierten Schritt 14 wird die Berechnung eines Vergleichsfaktor $VF1_n$ für einen Cluster/Modul durchgeführt. Aus den in dem dritten Schritt 13 erzeugten Daten wird der Vergleichsfaktor $VF1_n$ berechnet. Der Vergleichsfaktor $VF1_n$ setzt die ermittelte Gewichtung aller Schnittstellen in ein Verhältnis zur Summe aller Schnittstellen eines Moduls und kann beispielsweise wie folgt berechnet werden:

$$Vergleichsfaktor = \frac{\sum Gewichtung\ aller\ Schnittstellen}{\sum Alle\ Schnittstellen}$$

In dem fünften Schritt 15 wird eine Berechnung eines Vergleichsfaktors $VF1_n$ zwischen verschiedenen Clustern/Modulen durchgeführt. Die zuvor berechneten Vergleichsfaktoren $VF1_n$ werden herangezogen um einen Vergleich zwischen verschiedenen Clustern/Modulen zu ermöglichen. Im Prinzip wird damit ein Abstand oder eine Metrik beschrieben: Je näher sich zwei Cluster $C_k$ sind, desto ähnlicher ist ihre Semantik (Funktion). Für die Betrachtung eines modulübergreifenden Vergleichs werden mehrere Dimensionen betrachtet. So kann die Summe der Schnittstellen insgesamt, aber auch die jeweilig in dem vierten Schritt 14 berechneten Vergleichsfaktoren $VF1_n$ herangezogen werden. Hierfür werden die Summen aller Schnittstellen für beispielsweise ein erstes Modul und ein zweites Modul in ein Verhältnis gesetzt und anschließend mit den berechneten Vergleichsfaktor $VF1_n$ für ein Modul in Beziehung gesetzt. Dasselbe erfolgt dann für alle Module, wobei für die Berechnung die Module bzw. die Modulnummer und die dazugehörigen Werte vertauscht werden.

Ein so gedanklich aufgespannter Vektorraum entspricht einer intendierten Vergleichsmöglichkeit hinsichtlich Ähnlichkeit zwischen zwei verschiedenen Modulen, wobei gilt: Je kleiner der berechnete modulübergreifende Vergleichsfaktor $VF1_n$, desto ähnlicher sind sich die zu vergleichenden Module (Wert 0 = die Module sind identisch). Je größer der berechnete Wert umso weniger haben die verglichenen Module gemeinsam. Das intendierte Vorgehen ermöglicht es zusätzlich weitere Dimensionen mit aufzunehmen, im gewählten Beispiel wird nur ein 2-dimensionaler Vektorraum aufgespannt. Dies lässt sich aber prinzipiell auf n-Dimensionen und damit auf n-Vergleichsmöglichkeiten erweitern.

Mit einem sechsten Schritt 16 und einem Vergleichsmittel 17 kann eine Visualisierung der Ergebnisse durchgeführt werden. Die Ergebnisse können in dem letzten Schritt visualisiert werden, z.B. in Form einer Abhängigkeitsmatrix 30. Dies ermöglicht den sofortigen Vergleich über alle verglichenen Module.

Die erfindungsgemäße Lösung umgeht das Problem, dass Code-Artefakte nicht ohne Weiteres mit anderen Code-Artefakten verglichen werden können. Das bedeutet, dass es für die gleiche Sache (z.B. für die Ansteuerung eines Förderbandes) im Prinzip unendlich viele Implementierungsmöglichkeiten geben kann. Eine Lösung hierfür wäre, den jeweilig spezifischen Code in ein neutrales Prozessmodell zu transformieren, und den im Code automatisierten Prozess abstrakt zu betrachten. Dieser Prozess kann dann wiederum mit anderen Prozessmodellen, wiederum erzeugt aus Code, verglichen werden und so indirekt auf Ähnlichkeit des Codes geschlossen werden. Dies ist allerdings nur eine theoretische Möglichkeit, leider gibt es derzeit trotz intensiver Forschung, keine Möglichkeit eines "Code zum abstrakten Prozessmodell"-Transfers.

Das Problem mit dem Code zu abstrakten Prozessmodellen wird durch die beschriebene Lösung umgangen, in dem nicht der Code, sondern die Schnittstelle des Codes, konkret innerhalb von Modulen und nach außen, betrachtet wird. Die dahinterstehende Hypothese ist, dass wenn die Schnittstelle eines Moduls gleich oder ähnlich zu einem anderen Modul ist, muss der dahinterstehende Code auch gleich sein oder zumindest ähnliche Aufgaben erfüllen. Der Code ist daher im beschriebenen Ansatz eine Black-Box. Dies hat den Vorteil, unabhängig von einer konkreten Implementierung zu sein. Aus dem beschriebenen Verfahren lässt sich daher eine Ähnlichkeit zwischen verschiedenen Modulen ableiten und eine Entscheidung herbeiführen, ob ein allgemeingültiges Modul aus anderen Modulen gebildet werden kann oder nicht.

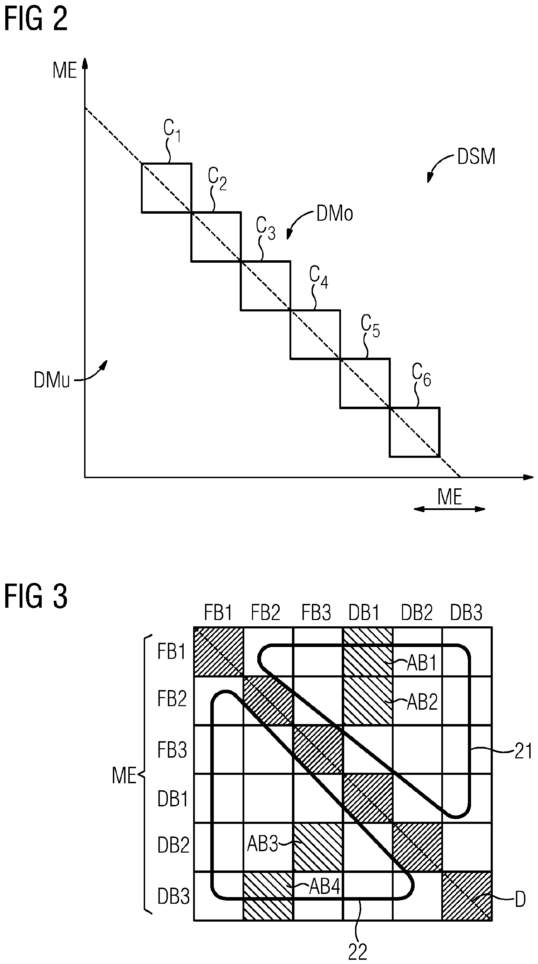

Mit der FIG 2 ist eine Design-Struktur-Matrix DSM, welche für die Clusteranalyse benutzt wird, dargestellt. Die Design-Struktur-Matrix DSM weist eine obere Dreiecksmatrix DMo und eine untere Dreiecksmatrix DMu auf. Als Elemente ME der Design-Struktur-Matrix DSM werden die Bausteine FBi,DBi eingesetzt. Längs einer Diagonalen D werden durch die Eintragung der Abhängigkeiten die Cluster $C_1,...,C_6$ gebildet.

Gemäß der FIG 3 ist eine Detailansicht eines Clusters $C_k$ dargestellt. Die hier implementierte Design-Struktur-Matrix DSM ist eine Komponenten-basierte Design-Struktur-Matrix DSM, d.h. es werden Teile des Systems in Beziehung zueinander gesetzt. Gemäß FIG 3 ist die abgebildete Beziehung der Datenaustausch zwischen einem Funktionsbaustein $FB_1,FB_2,FB_3$ und globalen Variablen $V_i$ als Datenbausteine $DB_1,DB_2,DB_3$. Ein ausgefülltes Feld gibt an, dass eine Aufrufbeziehung von einen Baustein auf der vertikalen Achse mit einen Baustein in der horizontalen Achse erfolgt und umgekehrt. Die Design-Struktur-Matrix DSM besteht aus zwei Dreiecksmatrixen. Im vorliegenden Beispiel zeigt die untere Dreiecksmatrix DMu den lesenden Datenaustausch 22 und die obere Dreiecksmatrix DMo den schreibenden Datenaustausch 23. So wird beispielsweise für eine erste Aufrufbeziehung AB1, in welcher der erste Funktionsbaustein $FB_1$ in den ersten Datenbaustein $DB_1$ schreibt, gegraut.

Für eine zweite Aufrufbeziehung AB2, in welcher der zweite Funktionsbaustein $FB_2$ in den ersten Funktionsbaustein $DB_1$ schreibt, wird ebenfalls das entsprechende Feld gegraut.

Für eine dritte Aufrufbeziehung AB3, bei welcher der dritte Funktionsbaustein $FB_3$ aus dem zweiten Datenbaustein $DB_2$ liest wird das entsprechende Feld gegraut. Und für eine vierte Aufrufbeziehung AB4, bei welcher der zweite Funktionsbaustein aus dem dritten Funktionsbaustein $DB_3$ liest, wird ebenfalls das entsprechende Feld gegraut.

Ein Datenaustausch erfolgt dabei bis auf wenige Ausnahmen, in der Regel primär innerhalb der Modulgrenzen bzw. innerhalb der festgestellten Cluster $C_k$. Für den dargestellten Cluster $C_k$ gemäß FIG 3, in welchen Funktionalitäten des Moduls auf mehrere Programmorganisationseinheiten POE verteilt sind, aber über zugehörige modulinterne Aufrufbeziehungen kommunizieren, werden die logischen Zusammenhänge innerhalb der Module durch die Clusteranalyse dabei klar erkennbar.

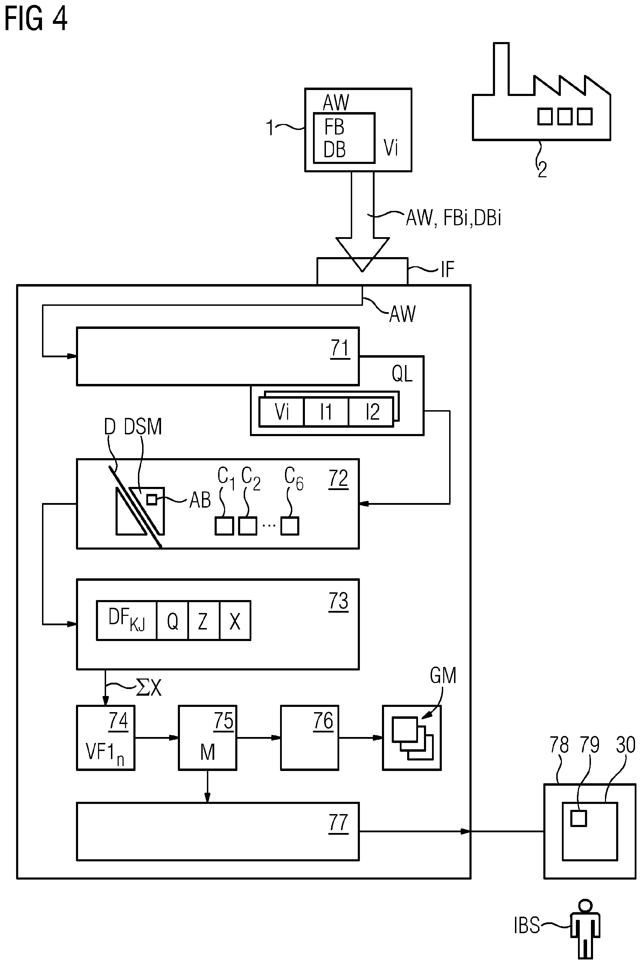

Mit der FIG 4 ist ein Rechnersystem 70 ausgestaltet zur Analyse eines Programmcodes AW einer Steuerungssoftware einer Automatisierungsanlage 1 für eine industrielle Anlage 2 dargestellt. Die Automatisierungsanlage 1 weist eine modular aufgebaute Steuerungssoftware auf, diese Steuerungssoftware besteht aus dem Programmcode AW, welcher wiederum einzelne Bausteine $FB_i$, $DB_i$ umfasst. Die Automatisierungsanlage 1 ist über eine Schnittstelle IF mit dem Rechnersystem 70 verbunden. Die Schnittstelle IF ist dabei ausgestaltet, auf den Programmcode AW der Automatisierungsanlage 1 zuzugreifen. Als ein Datenstrom kann nun das Rechnersystem 70 mit einem ersten Analysemittel 71 den Programmcode AW bzw. die Bausteine $FB_i,DB_i$ entgegennehmen und analysieren. Das erste Analysemittel 71 ist ausgestaltet, den Programmcode AW dahingehend zu analysieren, dass eine Querverweisliste QL von verwendeten Variablen $V_i$ durch eine Aufstellung von einer ersten Information I1 bezüglich eines Ortes des Aufrufes der Variablen $V_i$ und einer zweiten Information I2 bezüglich der Art der Verwendung der Variablen $V_i$ erstellt werden kann.

Mit dieser Information der Querverweisliste QL kann ein zweites Analysemittel 72 weiterarbeiten. Das zweite Analysemittel 72 ist ausgestaltet, eine Aufrufbeziehung AB durch einen Datenaustausch einer Variablen $V_i$ zwischen zwei Bausteinen $FB_i,DB_i$ zu erkennen und weiterhin ist das zweite Analysemittel 72 ausgestaltet, diese Aufrufbeziehung AB mittels einer Clusteranalyse und mit Hilfe einer Design-Struktur-Matrix DSM zu analysieren und identifizierte Cluster, nämlich einen ersten Cluster $C_1$, einen zweiten Cluster $C_2$ bis zu einen sechsten Cluster $C_6$ zu identifizieren.

Das Rechnersystem 70 weist weiterhin ein drittes Analysemittel 73 auf, welches ausgestaltet ist die Cluster $C_k$ dahingehend zu analysieren, dass mit Hilfe der Querverweisliste QL aus jedem Eintrag der Querverweisliste QL, welcher zu einer Aufrufbeziehung AB des Clusters $C_k$ passt, ein Datenfeld $DF_{kj}$ erzeugt wird. Das erzeugte Datenfeld $DF_{kj}$ weist einen Quell-Eintrag Q, einen Ziel-Eintrag Z und einen Zähler-Eintrag x des Datenaustausches auf.

Ein erstes Bestimmungsmittel 74 ist ausgestaltet, einen Modul-Vergleichsfaktor $VF1_n$ für jeweils einen zu analysierenden Cluster $C_k$ zu bilden, dabei wird aus den Koeffizienten aus der Summe aller Zähler-Einträge $\Sigma x$ und der Anzahl der Datenfelder $DF_{kj}$ der Vergleichsfaktor VF1 ermittelt.

Ein zweites Bestimmungsmittel 75 ist dabei dazu ausgestaltet, ein Vergleichs-Maß M für eine semantische Äquivalenz des Programmcodes AB für zumindest zwei Cluster $C_k$ zu bestimmen. Dabei ist das zweite Bestimmungsmittel 75 dazu ausgestaltet, die Anzahl der erzeugten Datenfelder $DF_{kj}$ für einen ersten Cluster $C_1$ und die Anzahl der erzeugten Datenfelder für einen zweiten Cluster $C_2$ in ein Verhältnis zu setzen und anschließend mit dem jeweiligen Modul-Vergleichsfaktor $VF_{1n}$ in Beziehung zu setzen.

Mit diesen Ergebnissen kann dann ein drittes Bestimmungsmittel 76 arbeiten, das dritte Bestimmungsmittel 76 ist ausgestaltet, anhand des Vergleichs-Maß M eine Ähnlichkeit zwischen verschiedenen Clustern $C_k$ zu bestimmen und weiterhin ausgestaltet, mittels des Vergleichs-Maß M eine Entscheidung herbeizuführen, ob ein allgemein gültiges Modul GM aus den diese Cluster $C_k$ betreffenden Bausteinen ableitbar ist.

Weiterhin weist das Rechnersystem 70 ein Aufbereitungsmittel 77 auf, welches ausgestaltet ist, die Ergebnisse für das Vergleichs-Maß M zwischen zwei Modulen in einer Abhängigkeitsmatrix 30 auf einen Display 78 visuell darzustellen, wobei die Abhängigkeitsmatrix 30 interaktive Anzeigemittel 79 aufweist, welche einen Inbetriebsetzer IBS den sofortigen Vergleich über alle verglichenen Module ermöglicht.

## Patentansprüche

1.  Verfahren zur Analyse eines Programmcodes (AW) einer Steuerungssoftware einer Automatisierungsanlage für eine industrielle Anlage,
    wobei die Steuerungssoftware modular aufgebaut ist und einzelne Module wiederum Bausteine ($FB_i,DB_i$) umfassen, wobei

    - der Programmcode (AW) analysiert wird und eine Querverweisliste (QL) von verwendeten Variablen ($V_i$) durch eine Aufstellung von einer ersten Information (I1) bezüglich eines Ortes des Aufrufs der Variablen ($V_i$) und einer zweiten Information (I2) bezüglich der Art der Verwendung der Variablen ($V_i$) erstellt wird, und
    - mittels einer Clusteranalyse werden Cluster ($C_k$) dadurch identifiziert, dass eine Aufrufbeziehung (AB) in dem Programmcode (AW) der Module durch einen Datenaustausch einer Variablen ($V_i$) zwischen zwei Bausteinen ($FB_i,DB_i$) erkannt wurde und diese Aufrufbeziehung (AB) wird dann dem Cluster (Ck) zugeordnet, wobei
    - die Cluster ($C_k$) dahingehend analysiert werden, dass mit Hilfe der Querverweisliste (QL) aus jedem Eintrag der Querverweisliste (QL), welcher zu einer Aufrufbeziehung (AB) des Clusters ($C_k$) passt ein Datenfeld ($DF_{kj}$) erzeugt wird, in welchem ein Quell-Eintrag (Q), ein Ziel-Eintrag (Z) und ein Zähler-Eintrag (x) des Datenaustausches hinterlegt wird, wobei jeweils ein
    - Modul-Vergleichsfaktor ($VF1_n$) für einen analysierten Cluster ($C_k$) aus dem Quotienten aus der Summe aller Zähler-Einträge ($\Sigma x$) und Anzahl der Datenfelder ($DF_{kj}$) gebildet wird, wobei
    - ein Vergleichs-Maß (M) für eine semantische Äquivalenz des Programmcodes (AW) für zumindest zwei Cluster ($C_k$) gebildet wird, hierfür werden die Anzahl der erzeugten Datenfelder ($DF_{kj}$) für einen ersten Cluster ($C_1$) und die Anzahl der erzeugten Datenfelder für einen zweiten Cluster ($C_2$) in ein Verhältnis gesetzt und anschließend mit dem jeweiligen Modul-Vergleichsfaktor ($VF1_n$) in Beziehung gesetzt,

    wobei anhand des Vergleichs-Maß (M) eine Ähnlichkeit zwischen verschiedenen Clustern ($C_k$) abgeleitet wird und mittels des Vergleichs-Maß (M) eine Entscheidung herbeigeführt wird, ob ein allgemeingültiges Modul (GM) aus den diesen Clustern ($C_k$) betreffenden Modulen bzw. aus den diese Cluster ($C_k$) betreffenden Bausteinen (FBi,DBi)ableitbar ist.

2.  Verfahren nach Anspruch 1, wobei bei der Clusteranalyse eine Design-Struktur-Matrix (DSM) genutzt wird, welche eine obere Dreiecksmatrix (DMo) und eine untere Dreiecksmatrix (DMu) umfasst, als Elemente (ME) der Design-Struktur-Matrix (DSM) werden die Bausteine (FBi,DBi) eingesetzt, in der oberen Dreiecksmatrix (DMo) wird ein schreibender Datenaustausch (21) zwischen den Bausteinen (FBi,DBi) erfasst und in der unteren Dreiecksmatrix (DMu) wird ein lesender Datenaustausch (22) zwischen den Bausteinen (FBi,DBi) erfasst.

3.  Verfahren nach Anspruch 1 oder 2, wobei aus den als allgemeingültiges Modul (GM) erkannten Clustern ($C_k$) wiederverwendbare Softwaremodule (29) erzeugt werden.

4. Verfahren nach einem der Ansprüche 1 bis 3, wobei die Ergebnisse für das Vergleichs-Maß (M) zwischen zwei Modulen in einer Abhängigkeitsmatrix (30) visuell dargestellt werden, welches einem Inbetriebsetzer den sofortigen Vergleich über alle verglichenen Module ermöglicht.

5. Verfahren nach einem der Ansprüche 1 bis 4, wobei das Vergleichs-Maß (M) anhand folgender Formel berechnet wird:

$$M = (\text{Anzahl der Datenfelder }_{Modul1} * VF1_{Modul2}) - (VF1_{Modul1} * \text{Anzahl der Datenfelder }_{Modul2})$$

6. Verfahren nach einem der Ansprüche 1 bis 5, zur Durchführung bei einem Systemwechsel von einer bestehenden Industrieanlage mit Alt-Geräten auf eine modernisierte Industrieanlage mit Neu-Geräten, wobei die allgemeingültigen Module (GM) aus einen Softwarebestand der Module der Alt-Geräte identifiziert und generiert werden.

7. Rechnersystem (70) ausgestaltet zur Analyse eines Programmcodes (AW) einer Steuerungssoftware einer Automatisierungsanlage (1) für eine industrielle Anlage (2), wobei die Steuerungssoftware modular aufgebaut ist und einzelne Module wiederum Bausteine ($FB_i$,$DB_i$) umfassen, ausweisend eine Schnittstelle (IF) ausgestaltet auf dem Programmcode (AW) zuzugreifen,

   - ein erstes Analysemittel (71) ausgestaltet den Programmcode (AW) zu analysieren und eine Querverweisliste (QL) von verwendeten Variablen ($V_i$) durch eine Aufstellung von einer ersten Information (I1) bezüglich eines Ortes des Aufrufs der Variablen ($V_i$) und einer zweiten Information (I2) bezüglich der Art der Verwendung der Variablen ($V_i$) zu erstellen, und
   - ein zweites Analysemittel (72) ausgestaltet eine Aufrufbeziehung (AB) durch einen Datenaustausch einer Variablen ($V_i$) zwischen zwei Bausteinen ($FB_i$,$DB_i$) zu erkennen und weiterhin ausgestaltet diese Aufrufbeziehung (AB) mittels einer Clusteranalyse dann Clustern ($C_k$) zuzuordnen,
   - ein drittes Analysemittel (73) ausgestaltet die Cluster ($C_k$) dahingehend zu analysieren, dass mit Hilfe der Querverweisliste (QL) aus jedem Eintrag der Querverweisliste (QL), welcher zu einer Aufrufbeziehung (AB) des Clusters (Ck) passt ein Datenfeld ($DF_{kj}$) erzeugt wird, in welchem ein Quell-Eintrag (Q), ein Ziel-Eintrag (Z) und ein Zähler-Eintrag (x) des Datenaustausches hinterlegt wird,
   - ein erstes Bestimmungsmittel (74) ausgestaltet einen Modul-Vergleichsfaktor ($VF1_n$) für jeweils einen analysierten Cluster ($C_k$) aus dem Quotienten aus der Summe aller Zähler-Einträge ($\Sigma x$) und Anzahl der Datenfelder ($DF_{kj}$) zu bestimmen,
   - ein zweites Bestimmungsmittel (75) ausgestaltet ein Vergleichs-Maß (M) für eine semantische Äquivalenz des Programmcodes (AW) für zumindest zwei Cluster ($C_k$) zu bestimmen, dabei ist das zweite Bestimmungsmittel (75) dazu ausgestaltet die Anzahl der erzeugten Datenfelder ($DF_{kj}$) für einen ersten Cluster ($C_1$) und die Anzahl der erzeugten Datenfelder für einen zweiten Cluster ($C_2$) in ein Verhältnis zu setzen und anschließend mit dem jeweiligen Modul-Vergleichsfaktor ($VF1_n$) in Beziehung zu setzen,
   - ein drittes Bestimmungsmittel (76) ausgestaltet anhand des Vergleichs-Maß (M) eine Ähnlichkeit zwischen verschiedenen Clustern ($C_k$) zu bestimmen und weiterhin ausgestaltet mittels des Vergleichs-Maß (M) eine Entscheidung herbeizuführen, ob ein allgemeingültiges Modul (GM) aus den diesen Clustern ($C_k$) betreffenden Modulen bzw. aus den diese Cluster ($C_k$) betreffenden Bausteinen ($FB_i$,$DB_i$) ableitbar ist.

8. Rechnersystem (70) nach Anspruch 7, wobei das dritte Analysemittel (73) eine Design-Struktur-Matrix (DSM) aufweist, welche eine obere Dreiecksmatrix (DMo) und eine untere Dreiecksmatrix (DMu) umfasst, als Design-Struktur-Elemente (ME) der Matrix (DSM) sind die Bausteine (FBi,DBi) eingesetzt, in der oberen Dreiecksmatrix (DMo) ist der schreibende Datenaustausch (21) zwischen den Bausteinen (FBi,DBi) dargestellt und in der unteren Dreiecksmatrix (DMu) ist der lesende Datenaustausch (22) zwischen den Bausteinen (FBi,DBi) dargestellt.

9. Rechnersystem (70) nach einem der Ansprüche 7 oder 8, aufweisend ein Aufbereitungsmittel (77), welches ausgestaltet ist die Ergebnisse für das Vergleichs-Maß (M) zwischen zwei Modulen in einer Abhängigkeitsmatrix (30) auf einem Display (78) visuell darzustellen, wobei die Abhängigkeitsmatrix (30) interaktive Anzeigemittel (79) aufweist, welche einem Inbetriebsetzer (IB) den sofortigen Vergleich über alle verglichenen Module ermöglicht.

**FIG 1**

Start

$9$

$10$ — [ ]  ← AW(FBi,DBi)

$11$ — [ →→ QL ]

| Vi | |
|---|---|
| l1 | xyz |
| l2 | vvvx |

$12$ — [ QL ⟶ AB ⟶ $C_K$ ]

$13$ — [ $C_K \begin{cases} QL \\ AB \end{cases}$ ]

| $DF_{KJ}$ |
|---|
| Q |
| Z |
| X |

$14$ — $$VF1_{n(C_K)} = \frac{\sum X}{\sum j}$$

$15$ — $$M = \sum DF_{1j} * VF1_{(C2)} - VF1_{(C1)} * \sum DF_{2j}$$

$C_1, C_2 \;\hat{=}\; GM$

$16$ — $\begin{array}{c} M_1(C_1) \\ ? \\ M_2(C_2) \end{array}$

$17$

Ende

FIG 2

FIG 3

# FIG 4

Europäisches
Patentamt

European
Patent Office

Office européen
des brevets

# EUROPÄISCHER RECHERCHENBERICHT

**Nummer der Anmeldung**

**EP 22 16 9486**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/058083 A1 (SIEMENS AG [DE]) 1. April 2021 (2021-04-01) * Anspruch 1 * * Seite 16, Zeile 4 – Zeile 6 * * Seite 16, Zeile 32 – Seite 17, Zeile 6 * * Seite 19, Zeile 15 – Zeile 20 * * Seite 41, Zeile 31 * * Seite 42, Zeile 6 – Zeile 12 * ----- | 1-9 | INV. G06F8/36 G06F8/75 |
| A | WIGGERTS T A ED – BAXTER I ET AL: "Using clustering algorithms in legacy systems remodularization", REVERSE ENGINEERING, 1997. PROCEEDINGS OF THE FOURTH WORKING CONFERENC E ON AMSTERDAM, NETHERLANDS 6-8 OCT. 1997, LOS ALAMITOS, CA, USA,IEEE COMPUT. SOC, US, 6. Oktober 1997 (1997-10-06), Seiten 33-43, XP010247816, DOI: 10.1109/WCRE.1997.624574 ISBN: 978-0-8186-8162-2 * Kapitel 3, 3.1 * ----- | 1-9 | |
| | | | RECHERCHIERTE SACHGEBIETE (IPC) |
| A | US 2020/371760 A1 (GASS ALBRECHT [US] ET AL) 26. November 2020 (2020-11-26) * Anspruch 1 * * Absatz [0153] – Absatz [0156] * * Absatz [0159] * ----- | 1-9 | G06F |

Der vorliegende Recherchenbericht wurde für alle Patentansprüche erstellt

| Recherchenort | Abschlußdatum der Recherche | Prüfer |
|---|---|---|
| München | 5. Oktober 2022 | Filimon, Diana |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 16 9486

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2022

| Im Recherchenbericht angeführtes Patentdokument | Datum der Veröffentlichung | Mitglied(er) der Patentfamilie | | Datum der Veröffentlichung |
|---|---|---|---|---|
| WO 2021058083 A1 | 01-04-2021 | CN | 114450643 A | 06-05-2022 |
| | | EP | 4007940 A1 | 08-06-2022 |
| | | WO | 2021058083 A1 | 01-04-2021 |
| US 2020371760 A1 | 26-11-2020 | US | 2019243621 A1 | 08-08-2019 |
| | | US | 2020371760 A1 | 26-11-2020 |

EPO FORM P0461

Für nähere Einzelheiten zu diesem Anhang : siehe Amtsblatt des Europäischen Patentamts, Nr.12/82